(19) Europäisches Patentamt
European Patent Office
Office européen des brevets

(11) Publication number: **0 215 817 B1**

# (12) EUROPEAN PATENT SPECIFICATION

(45) Date of publication of patent specification: **13.03.91 Bulletin 91/11**

(51) Int. Cl.$^5$: **C08F 230/08**, G02B 1/04, C08F 299/08

(21) Application number: **86901225.2**

(22) Date of filing: **28.01.86**

(86) International application number: **PCT/US86/00198**

(87) International publication number: **WO 86/04341 31.07.86 Gazette 86/17**

## (54) CONTINUOUS-WEAR LENSES.

(30) Priority: **29.01.85 US 696014**
**10.04.85 US 722121**
**16.05.85 US 734898**

(43) Date of publication of application: **01.04.87 Bulletin 87/14**

(45) Publication of the grant of the patent: **13.03.91 Bulletin 91/11**

(84) Designated Contracting States: **AT BE CH DE FR GB IT LI LU NL SE**

(56) References cited: **EP-A- 114 894**

(56) References cited:
**GB-A- 2 119 951**
**US-A- 4 390 676**
**US-A- 4 419 505**
**US-A- 4 535 138**

(73) Proprietor: **Bausch & Lomb Incorporated**
**42 East Avenue P.O. Box 743**
**Rochester New York 14603 (US)**

(72) Inventor: **STOYAN, Nick**
**3841 Diamonte Place**
**Encino, CA 91416 (US)**

(74) Representative: **Allam, Peter Clerk et al**
**LLOYD WISE, TREGEAR & CO. Norman House**
**105-109 Strand**
**London WC2R 0AE (GB)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

The present invention is directed to eye-compatible lenses, particularly hard contact lenses having excellent oxygen permeability and wettability.

Contact lenses presently on the market are classified into two large groups : soft contact lenses and hard contact lenses. Hard contact lenses are better able than soft contact lenses to retain visual characteristics, but are less comfortable. The art has sought to increase oxygen permeability of hard contact lenses, to extend the length of time they can be worn without causing corneal damage or discomfort.

One proposed solution has been the formation of a copolymer of methyl methacrylate and a siloxane methacrylate compound. This solution has been less than satisfactory, since the lenses offered are not as hard, rigid, nor wettable as lenses formed from polymethyl methacrylate. In addition, such lenses are fragile and have poor mechanical processability.

EP-A-0114894 discloses an oxygen-permeable hard contact lens formed from a polymer obtained by interpolymerizing a monomer charge comprising :

(a) 30-50% by weight of an alkyl acrylate or methacrylate,

(b) 10-40% of a fluorine-containing monomer,

(c) 10-35% by weight of a silicone acrylate or methacrylate,

(d) 5-15% by weight of an unsaturated carboxylic acid having at least one carboxylic group in the molecule, and

(e) 0.1 to 15% by weight of a di- or triacrylate or -methacrylate of a di- or higher-hydric alcohol. Hexafluoroisopropylmethacrylate is one example given of the fluorine-containing monomer useful as component (b). However, the high content, of not less than 30% by weight, of the alkyl acrylate or methacrylate component, ie monomer component (a), is deleterious to achieving optimum oxygen-permeability and would counteract the benefit of using hexafluoroisopropylmethacrylate. Moreover, the polymer compositions disclosed do not, despite their high content of alkyl acrylate or methacrylate, have good wettability properties, the contact angle with water being in the range 65°-67°.

The object of the present invention is to overcome the deficiencies in the state of the art by offering lenses having a high degree of oxygen permeability, excellent wettability, and, if desired, ultraviolet absorption. The primary benefit of UV absorptivity is the resistance to user development of cataracts.

The present invention is directed to eye-compatible, continuously-wearable, oxygen-permeable optical lenses of excellent wettability, formed of a polymer obtained by interpolymerizing a monomer charge comprising:

(a) a fluoroorgano monomer component comprising hexafluoroisopropylmethacrylate ;

(b) at least one organosilicon monomer copolymerizable with hexafluoroisopropylmethacrylate, monomer component (b) being present in an amount of from 10 to 40 percent by weight based on the total weight of the monomers ;

(c) at least one hydrophilic monomer to provide in the resultant polymer a contact angle of less than 45°, the total amount of the hydrophilic monomer component being from 0.1 to 15 percent by weight based on the total weight of the monomers ;

(d) at least one crosslinking monomer present in an amount up to 5 percent by weight based on the total weight of the monomers, and

(e) optionally up to 50 percent by weight of the total organofluoro content of the polymer of one or more other monomers for adjusting the physical properties of the lens, with the proviso that the content in optional component (e) of alkyl acrylates or methacrylates shall not exceed 5 percent by weight of the monomer charge, said lens having an oxygen permeability of at least $150 \times 10^{-11}$ (cm²/sec.)(ml $O_2$/ml × mm Hg).

By the term "organosilicon monomer" as used herein, there is meant unsaturated silicon monomers which are copolymerizable with hexafluoroisopropylmethacrylate, to yield lenses of high oxygen permeability, and which, in the amounts employed, are non-deleterious to the lens user.

The presently preferred organosilicon monomers which may be used in accordance with the instant invention include organosilicon monomers which are organosilanes and/or organosiloxanes of the general formula:

$$CH_2 = \underset{\displaystyle COO-(CH_2-CHOH-CH_2O)_a-(CH_2)_b-X}{C-R_1} \qquad (3)$$

wherein $R_1$ is hydrogen or methyl, $\underline{a}$ is 0 or 1, $\underline{b}$ is from 1 to 4, and X is an organosilicon moiety containing up to 16 silicon atoms. Desirably, at least a portion, or all, of the organosilicon monomer system is a hydroxyorganosilicon monomer, namely, a monomer having at least one hydroxyl group bonded to silicon. Preferably,

from 0.1 to 10 percent by weight of the monomers is a hydroxyorganosilicon monomer.

Preferred organosilicon compounds are acrylates and methacrylates of the general formula :

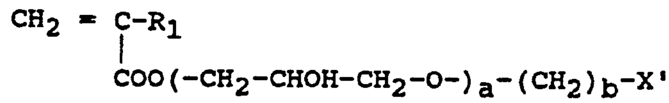

(4)

wherein X' is 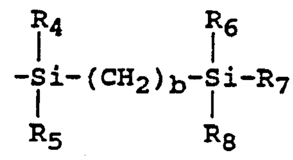 or 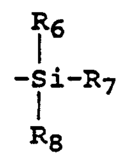

each of $R_4$ a $R_5$ is independently a $C_1$-$C_5$ alkyl, phenyl, hydroxyl, or $-O-Si(CH_3)_3$, and each of $R_6$, $R_7$ and $R_8$ is independently selected from $C_1$-$C_5$ ; $-CH_2=CH_2$ ; phenyl ; hydroxyl ; $-CH_2OH$ ;

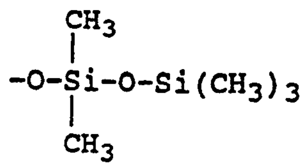 ; 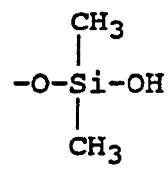 ;

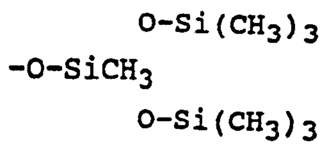 ; $O-Si-[OSi(CH_3)_3]_3$ ; or

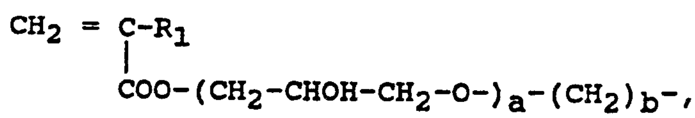

wherein $R_1$, a, and b are as defined above.

The monomers included are : tris(trimethylsiloxy)silylpropylmethacrylate, 1,3-bis(-γ-methacryloxypropyl)-1,1,3,3-tetra(trimethylsiloxy)disiloxane, vinyl di(trimethylsiloxy)silylpropylmethacrylate, pentamethyldisiloxy)-γ-methacryloxypropylsilane, trimethylsilylpropylmethacrylate, methyl di(trimethylsiloxy)silylpropylmethacrylate, tris(trimethylsiloxy)silylpropylglycerolmethacrylate. Tris(trimethylsiloxy)-γ-methacryloxypropylsilane is presently preferred. Another important monomer is 1,3-bis-(γ-methacryloxypropyl)-1,1,3,3-tetra(trimethylsiloxy)disiloxane, as it serves as a crosslinking agent without sacrificing oxygen permeability. When used for this purpose, concentration may vary from 0.1 to 2 percent by weight based on the total weight of the reactants.

Representative hydroxyorganisosilicon monomers include hydroxy-di-(trimethylsiloxy)silylpropylmethacrylate, hydroxy-di-(trimethylsiloxy)-γ-methacryloxypropylsilane, hydroxy-methyl(trimethylsiloxy)methacryloxymethylsilane, hydroxy-methyl(trimethylsiloxy)-methacryloxyethylsilane, hydroxy-methyl(trimethylsiloxy)methacryloxypropylsilane, hydroxy-di(trimethylsiloxy)-γ-methacryloxyethylsilane, hydroxy-di(trimethylsiloxy)-methacryloxy methylsilane, hydroxy-(trimethylsiloxy)-(pentamethyldisiloxy)-methacryloxy-methylsilane, and hydroxy-(trimethylsiloxy)-(pentamethyldisiloxy)-γ-methacryloxyethylsilane. Hydroxy-di(trimethylsiloxy)silylpropylmethacrylate is presently preferred.

Other useful organosilicon monomers are disclosed in U.S. Patents 4,152,508 to Ellis ; 4,153,641 to Deichert et al ; 4,189,546 to Deichert et al ; and 4,463,149 to Ellis, each incorporated herein by reference.

While total concentrations of organosilicon monomers preferably may range from 10 to 40 percent by weight based on the total weight of the monomers, the more preferred range is from 15 to 35 percent by weight, most preferably from 15 to 25 percent by weight.

While hexafluoroisopropylmethacrylate is essential to high oxygen permeability, as discussed in more detail below, oxygen permeability and wettability of the lens may be enhanced by the presence of a hydroxyorganosilicon monomer. Although the presently preferred concentration of the hydroxyorganosilicon monomer is from 0.1 to 10 percent by weight of the total monomers, it may be the exclusive organosilicon monomer, except for any multifunctional organosilicon monomer used as a crosslinking monomer.

The presently most preferred organosilicon monomers are tris(trimethylsiloxy)-γ-methacryloxypropylsilane, hydroxy-di(trimethylsiloxy)silylpropylmethacrylate, and 1,3-bis(γ-methacryloxypropyl)-1,1,3,3-tetra(-trimethylsiloxy)disiloxane, particularly mixtures thereof.

A second essential monomer component is a fluoroorgano monomer system comprising at least hexafluoroisopropylmethacrylate. This monomer, as against monomers of close structure, such as hexafluorobutylmethacrylate, has been surprisingly and unexpectedly found to enable the formation of lenses of extremely high oxygen permeability. The use of hexafluoroisopropylmethacrylate enables achievement of an oxygen permeability in excess of Dk 150, and even in excess of 300. Lenses formed from the polymer can be worn continuously, i.e. wearable twenty-four hours a day for indefinite periods of time.

Other fluoroorgano monomers may be used as diluent monomers, at some sacrifice of oxygen permeability. They include compounds of the formula :

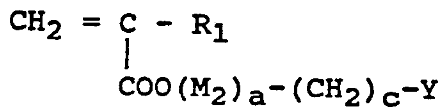

(4)

wherein $R_1$ and a are as defined above, $M_2$ is hydroxy alkyl, alkyl ether or hydroxy alkyl ether, c is from 0 to 4, and Y is a fluorocarbon group, preferably containing from 2 to 21 fluorine atoms. Preferably, Y has the general formula :

$$C_nF_{2n} + 1 \text{ or } C_nF_{2n}H.$$

The preferred fluoroorgano monomers of formula (4) have the formula :

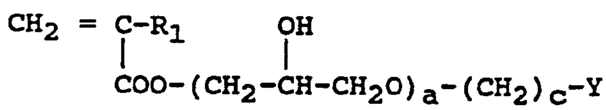

wherein $R_1$ is hydrogen or methyl and a, c and Y are as defined above.

Illustrative of fluoroorgano monomers are 2,2,2-trifluoroethylmethacrylate, hexafluorobutylmethacrylate, pentafluoro-n-propylmethacrylate, with 2,2,2-trifluoroethylmethacrylate being preferred for cost. Perfluoro or fluorinated styrenes may also be used.

Hydrophilic monomers are included in the composition to induce wettability. They preferably comprise an unsaturated carboxylic acid, most preferably methacrylic acid, for compatability of monomers and wearer comfort. Acrylic acid is functional but less desirable. Other monomers such as 2-hydroxyethylmethacrylate and, vinyl pyrrolidone may be used. Concentration may be in the range from 0.1 to 15 or more percent by weight, preferably from 2 to 10 percent by weight, based on the total weight of the monomers, and should be sufficient to provide in the resultant polymer a receding contact angle of 45° or less. The amount of hydrophilic monomer present depends on whether a UV-absorbing agent, as described below, is employed, as the latter also has the capability of adding hydrophilic properties.

The final essential monomer component is a crosslinking monomer which is a crosslinking agent, present in an amount up to 5, preferably up to 2, percent by weight based on the total weight of the monomers. At least one crosslinking agent, such as a multi-functional organosilicon monomer, a fluoroorgano monomer, an acrylate and/or a methacrylate, is employed in an amount sufficient to control hardness of the lens, which for hard lenses is in the range of Shore D hardness of greater than about 78, preferably from 80 to 85. A highly multifunctional organosilicon monomer is preferred, as it does not interfere with oxygen permeability. Other crosslinking agents which may be used include ethylene glycol dimethacrylate, ethylene glycol diacrylate, diethylene glycol dimethacrylate and diethylene glycol diacrylate.

A UV-absorbing agent, if desired, may be included. If a UV-absorbing agent is employed, its concentration may range from 0.1 to 20 percent by weight, preferably from 2 to 10 percent by weight based on the total weight

of the monomers and agent. The UV-absorbing agents used herein cooperate with the hydrophilic monomer to induce wettability and antisepticability, i.e. self-sterilizable, in consequence of hydroxy-substituted benzene moieties. The UV-absorbers absorb in the polymerized state in the range of from about 300 nm to about 450 nm, preferably with no less than about 70% UV radiation at 370 nm. The UV-absorbing agent may be monomers that are interpolymerized with the monomers of the composition to become part of the formed copolymer, or they may be separately homopolymerized or copolymerized to non-reactive polymers of sufficient molecular weight so as to be physically entrained in the copolymer body formed by polymerizing the lens-forming monomers. The presently preferred monomers are hydroxybenzophenone or benzotriazole compounds of the formula :

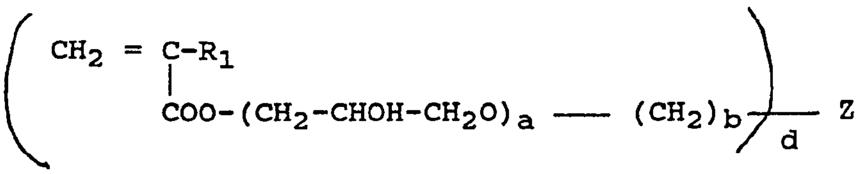 (2)

wherein $R_1$ is hydrogen or methyl, a is 0 or 1, b is from 1 to 4, d is 1 or 2, and Z is :

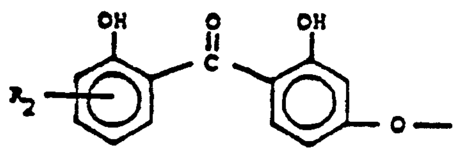 ;

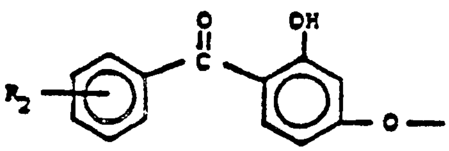 ; or 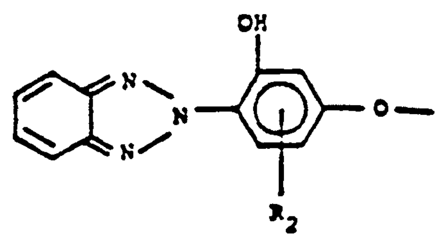

wherein $R_2$ is hydrogen, alkyl, preferably $C_1$-$C_5$ alkyl, or hydroxy. Alternately or in addition, the UV-absorbing monomer may be a benzotriazole of the formula :

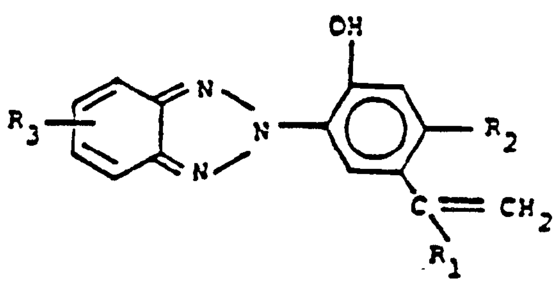

wherein $R_1$ and $R_2$ are as defined above, and $R_3$ is H or alkyl, preferably a $C_1$-$C_{10}$ alkyl, or hydroxyl. Alternately, UV-absorbing agents may be non-reactive homopolymers and copolymers comprising a UV-absorbing monomer which may be added to the monomer system and physically entrained in the polymerized mass to achieve UV protection.

Preferred UV-absorbing monomers for forming UV-absorbing agents include : 2-hydroxy-4-(2-methacryloyloxyethoxy)benzophenone, 2-hydroxy-4-(2-acryloyloxyethoxy)benzophenone, 2-hydroxy-4-(2-hydroxy-3-methacryloxypropyl)benzophenone and 2-(2-hydroxy-5-vinylphenyl)-2H-benzotriazole.

Although the copolymers used to form the lens of the present invention may be formed solely from the above

discussed fluoroorgano monomer component (a), the organosilicon monomer component (b), the hydrophilic monomer component (c) and the crosslinking monomer component (d), other reactive monomers such as acrylates, methacrylates, itaconic esters, styrenes, alkyl styrenes, fluorinated styrenes and fluorinated alkyl styrenes may, if desired, be included as part of the polymerizable composition in order to achieve a lens of desired properties such as hardness for machinability, wettability, and oxygen permeability.

For instance, oxygen permeability (all other factors being constant) will increase with an increase in organosilicon monomer content. At higher levels, the lens becomes more difficult to machine. Inclusion of monomers such as acrylates, methacrylates, itaconic esters, styrenes and alkyl styrenes may be employed as part of the monomer system to yield a lens having desirable properties such as machinability, oxygen permeability and wettability. Lenses having a Shore D hardness greater than about 78, preferably from 80 to 85, are desired for hard, machinable lenses.

Such optional monomers included in order to adjust physical properties of the lenses are generally provided in an amount up to 50% by weight of the total organofluoro content, typically up to 5 percent by weight of the total weight of the monomers. In the case of acrylates and methacrylates, the total content thereof must not exceed 5% by weight of the total weight of the monomers.

The lenses of the instant invention are formulated to have a high oxygen permeability (Dk) of at least 150, preferably greater than 200 [expressed in units of $10^{-11}$ ($cm^2$/sec.)$(ml)_2$/ml × mm Hg), as determined at 35°C], as induced by the presence of a sufficient amount of a hexafluoroisopropylmethacrylate. High oxygen permeability is surprisingly and unexpectedly attributed to the hexafluoroispropyl moiety.

The most preferred lenses of this invention are formed from a polymer containing on an interpolymerized basis from 19 to 30 parts by weight tris(trimethylsiloxy)silylpropylmethacrylate, from 0.1 to 0.2 parts by weight 1,3-bis(γ-methacryloxypropyl)-1,1,3,3-tetra(-tri-methylsiloxy)disiloxane, from 65 to 75 parts by weight hexafluoroisopropylmethacrylate, and approximately 5 parts by weight methacrylic acid.

Lens formation may be by free radical polymerization such as azobisisobutyronitrile (AIBN) and peroxide catalysts under conditions set forth in US-A-3808179. Colorants may be added prior to monomer polymerization. It is preferred to form the lens base in sheet form between layers of a non-adherent surface. The sheet is cut into smaller lens precursors from which the lens is ground to user specifications. Spin-casting, as described for instance in US-A-3408429, may also be used.

The following Examples are illustrative of the instant invention. With reference to the Examples, properties of the contact lenses were measured according to the following methods.

Oxygen permeability values were determined using a test method developed by Dr. Irving Fatt of Berkeley, California, and disclosed in the paper, entitled : "Oxygen Transmissibility and Permeability of Gas Permeable Hard Contact Lenses and Materials" by Irving Fatt, Ph.D., International Contact Lens Clinic, Vol. 11, No. 3, March 1984. The instrument was a polarographic cell with a curved surface for finished lenses, polarographic amplifier, recorder and a constant temperature chamber equipped with a temperature control unit. The measurements were made at 35°C and the units of oxygen permeability are ($cm^2$/sec.)(ml $O_2$/ml × mm Hg).

The water wettability of the contact lens material was determined by the sesile drop method using a Rame-Hart goniometer with an environmental chamber. Both the advancing and the receding contact angles were determined.

The hardness was measured as Shore D at 22°C using a hardness tester, and percent light transmission was measured using a recording spectrophotometer. The amount of materials extractable from the lenses were evaluated by first storing them in a saline solution for 10 days at 35°C. The lenses were then rinsed with distilled water, dried, weighed, and placed in stoppered, 25cc volumetric flasks, again containing saline as the extracting medium. The saline was analyzed daily for its extracted ultraviolet absorber by placing 4cc of the extract in a spectrophotometer cell and determining the absorption at 320 nm. The absorption values were compared against the calibration curve made for the pure ultraviolet absorber. Extractables can also be determined by the Soxhlet extraction method, using water as the solvent. The amount of extractables was determined only for a few of the materials in the Examples. Based on 0.04 gr average lens weight, extractables were found to be, on the average, less than $1 \times 10^{-4}$ mc grams/lens/day, until a steady state was reached.

The leachability-diffusibility was evaluated by cytotoxicity assay-agar overlay method.

The assay is based on the method described by Guess, W.L., Rosenbluth, S.A., Schmidt, B., and Autian, J., in "Agar Diffusion Method for Toxicity Screening of Plastics on Cultured Cell Monolayers", J. Pharm. Sci. 54 : 1545-1547, 1965 and is designed to detect the response of a mammalian monolayer cell culture to readily diffusible components from materials or test solutions applied to the surface of an agar layer overlaying the monolayer.

The response of the cell monolayer is evaluated, with respect to the discoloration of the red-stained monolayer, under and around the sample when the petri dish is viewed against a white background. Loss of color of the stained cells is considered to be a physiologically significant reaction of the cells. The extent of discol-

**Claims**

1. A highly oxygen-permeable continuous-wear lens formed of a polymer obtained by interpolymerizing a monomer charge comprising :

(a) a fluoroorgano monomer component comprising hexafluoroisopropylmethacrylate ;

(b) at least one organosilicon monomer copolymerizable with hexafluoroisopropylmethacrylate, monomer component (b) being present in an amount of from 10 to 40 percent by weight based on the total weight of the monomers ;

(c) at least one hydrophilic monomer to provide in the resultant polymer a contact angle of less than 45°, the total amount of the hydrophilic monomer component being from 0.1 to 15 percent by weight based on the total weight of the monomers ;

(d) at least one crosslinking monomer present in an amount up to 5 percent by weight based on the total weight of the monomers, and

(e) optionally up to 50 percent by weight of the total organofluoro content of the polymer of one or more other monomers for adjusting the physical properties of the lens, with the proviso that the content in optional component (e) of acrylates or methacrylates shall not exceed 5 percent by weight of the monomer charge, said lens having an oxygen permeability of at least $150 \times 10^{-11}$ ($cm^2$/sec.)(ml $O_2$/ml × mm Hg).

2. A highly oxygen-permeable continuous-wear lens as claimed in Claim 1, in which the organosilicon monomer component (b) is comprised of at least one monomer of the formula :

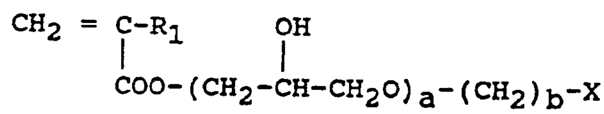

wherein $R_1$ is hydrogen or methyl, a is 0 or 1, b is from 1 to 4, and X is an organosilicon moiety containing up to 16 silicon atoms.

3. A highly oxygen-permeable continuous-wear lens as claimed in Claim 2, in which at least a portion of the organosilicon monomer component (b), preferably from 0.1 to 10 percent by weight of the total weight of the interpolymerized monomers, is a hydroxyorganosilicon monomer having at least one hydroxyl group attached to silicon of the organosilicon moiety.

4. A highly oxygen-permeable continuous-wear lens as claimed in any preceding claim, in which there is present in component (a), in addition to said hexafluoroisopropylmethacrylate, at least one other fluoroorgano monomer of the formula :

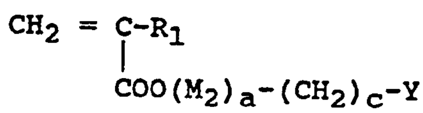

wherein $R_1$ is hydrogen, or alkyl, $M_2$ is hydroxy alkyl, alkyl ether, or hydroxy alkyl ether, a is 0 or 1, c is from 0 to 4, and Y is a fluorocarbon group, preferably containing from 2 to 21 fluorine atoms.

5. A highly oxygen-permeable containing continuous-wear lens as claimed in Claim 4, in which there is present in component (a), in addition to hexafluoroisopropylmethacrylate, at least one other fluoroorgano monomer of the formula :

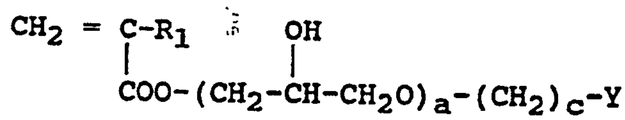

wherein $R_1$ is hydrogen or methyl, and a, c and Y are as defined in Claim 4.

6. A highly oxygen-permeable continuous-wear lens as claimed in any preceding claim, in which there is present at least one UV-absorbing agent present in an amount of from 0.1 to 20 percent by weight based on the weight of UV-absorbing agent and the monomers.

oration is confirmed by examination of the monolayer on an inverted microscope, and the extent of lysis of the cells within the discoloration zone is estimated. Typically, discoloration of cells precedes lysis, as manifested by a region and a region showing lysis. A sample is reported as "cytotoxic" only if lysis is observed.

Example 1

There was formulated a mixture of 19 parts by weight tris(trimethylsiloxy)silylpropylmethacrylate, 0.1 parts by weight 1,3-bis(γ-methacryloxypropyl)-1,1,3,3-tetra(trimethylsiloxy)disiloxane, 0.9 parts by weight hydroxy-di(trimethylsiloxy)silylpropylmethacrylate, 75 parts by weight hexafluoroisopropylmethacrylate, 5 parts by weight methacrylic acid, and 0.2 parts by weight AIBN. The mixture was homogenized, degassed and placed in a polymerization cell made of two glass plates separated by a seal and held together by spring clamps. After filling, the cell was purged with nitrogen, sealed and placed in a circulating water bath at 60°C for 10 hours. After the initial polymerization period, the cell was heated at 80°C for 3 hours, 100°C for one hour, and then allowed to cool to room temperature. The clamps were then removed and the transparent sheet heated for 2 hours at 100°C. The plastic sheet, about 1/4-inch in thickness, was cut into squares, then formed to discs which were used to repare corneal contact lenses using conventional hard-contact-lens-making equipment. The properties of this lens material are also shown in Table I.

Table I

| | |
|---|---|
| Oxygen permeability $\times 10^{-11}(cm^2/sec.)(ml\ O_2/ml \times mm\ Hg)$ | 234 |
| Contact angle, receding | 28 |
| Shore D hardness | 79 |
| Cytotoxicity assay | negative |

Lenses of another batch give an average permeability of $164 \times 10^{-11}$ $(cm^2/sec.)(ml\ O_2/ml \times mm\ Hg)$.

Example 2

The procedure of Example 1 was repeated, except that the formulation contained 28.5 parts by weight tris(trimethylsiloxy)silylpropylmethacrylate, 0.2 parts by weight 1,3-bis(-methacryloxypropyl)-1,1,3,3-tetratrimethylsiloxy)disiloxane, 1.3 parts by weight hydroxy-di(trimethylsiloxy)silylpropylmethacrylate, 65 parts by weight hexafluoroisopropylmethacrylate, and 5 parts by weight methacrylic acid. Average oxygen permeability was $398 \times 10^{-11}(cm^2/sec.)(ml\ O_2/ml \times Hg)$.

Control

The procedure of Example 1 was repeated, except that hexafluorobutylmethacrylate was used instead of hexafluoroisopropylmethacrylate. The properties are shown in Table II.

Table II

| | |
|---|---|
| Oxygen permeability $\times 10^{-11}(cm^2/sec.)(ml\ O_2/ml \times mm\ Hg)$ | 42 |
| Contact angle, receding | 26 |
| Shore D hardness | 78 |
| Cytotoxicity assay | negative |

(b) methacrylic acid in an amount, within the range from 0.1 to 15% by weight based on the total weight of monomers forming the polymer, to provide to the resultant polymer a contact angle of less than 45° ; and

(c) at least one crosslinking monomer, the total of crosslinking monomers being present in a concentration of from 0.1 to 2 percent by weight based on the total weight of the monomers, the balance of the monomers comprising hexafluoroisopropylmethacrylate.

12. A highly oxygen-permeable continuous-wear lens comprising a polymer containing, on an interpolymerized basis, from 19 to 30 parts by weight tris(trimethyl-siloxy)silylpropylmethacrylate, from 0.1 to 0.2 parts by weight 1,3-bis(γ-methacryloxypropyl)1,1,3,3-tetra(-tri-methylsiloxy)disiloxane, from 65 to 75 parts by weight hexafluoroisopropylmethacrylate, and approximately 5 parts by weight methacrylic acid.

## Ansprüche

1. Hoch sauerstoffdurchlässige Linse zum andauernden Tragen, die aus einem Polymer hergestellt ist, das durch Interpolymerisieren einer Monomercharge umfassend

(a) eine Fluororganomonomerkomponente, die Hexafluorisopropylmethacrylat enthält ;

(b) wenigstens ein Organosiliziummonomer, das mit Hexafluorisopropylmethacrylat copolymerisierbar ist, wobei der Monomerbestandteil (b) in einer Menge von 10 bis 40 Gew.-% bezogen auf das Gesamtgewicht der Monomeren vorliegt ;

(c) wenigstens ein hydrophiles Monomer, um im entstandenen Polymer einen Kontaktwinkel von weniger als 45° zu schaffen, wobei die Gesamtmenge an hydrophilem Monomerbestandteil von 0,1 bis 15 Gew.-%, bezogen auf das Gesamtgewicht der Monomeren, beträgt ;

(d) wenigstens ein vernetzendes Monomer, das in einer Menge von bis zu 5 Gew.-%, bezogen auf das Gesamtgewicht der Monomeren, vorliegt und

(e) gegebenenfalls bis zu 50 Gew.-% des gesamten Organofluorgehaltes des Polymers eines oder mehrerer anderer Monomere, um die physikalischen Eigenschaften der Linse einzustellen, mit der Maßgabe, daß der Gehalt des gegebenenfalls vorhandenen Bestandteiles(e) an Acrylaten oder Methacrylaten 5 Gew.-% der Monomercharge nicht überschreitet, erhalten wird,

wobei die genannte Linse eine Sauerstoffdurchlässigkeit von wenigstens $150 \times 10^{-11}$ ($cm^2$/sec)(ml $O_2$/ml × mm Hg) aufweist.

2. Hoch sauerstoffdurchlässige Linse zum andauernden Tragen nach Anspruch 1, in der der Organosiliziummonomerbestandteil (b) wenigstens ein Monomer der Formel

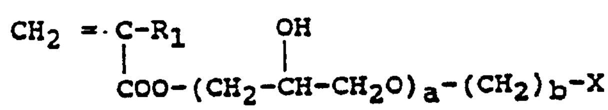

umfaßt, worin $R_1$ Wasserstoff oder Methyl bedeutet, a für 0 oder 1 steht, b 1 bis 4 darstellt und X ein Organosiliziumanteil ist, der bis zu 16 Siliziumatome enthält.

3. Hoch sauerstoffdurchlässige Linse zum andauernden Tragen nach Anspruch 2, worin wenigstens eine Teilmenge des Organosiliziummonomerbestandteils (b), vorzugsweise 0,1-10 Gew.-% des Gesamtgewichts der interpolymerisierten Monomeren, ein Hydroxyorganosiliziummonomer ist, von dem wenigstens eine Hydroxylgruppe an das Silizium des Organosiliziumanteils gebunden ist.

4. Hoch sauerstoffdurchlässige Linse zum andauernden Tragen nach einem der vorhergehenden Ansprüche, in der im Bestandteil (a) zusätzlich zum genannten Hexafluorisopropylmethacrylat wenigstens ein weiteres Fluororganomonomer der Formel

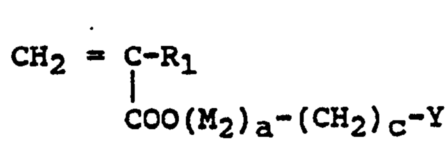

vorhanden ist, worin $R_1$ Wasserstoff oder Alkyl bedeutet, $M_2$ Hydroxyalkyl, Alkyläther oder Hydroxyalkyläther ist, a für 0 oder 1 steht, c 0 bis 4 bedeutet und Y eine Fluorkohlenstoffgruppe darstellt, die vorzugsweise 2 bis

7. A highly oxygen-permeable continuous-wear lens as claimed in Claim 6, in which the UV-absorbing agent comprises a polymerized amount of a monomer selected from the group consisting of a hydroxybenzophenone or benzotriazole of the formula :

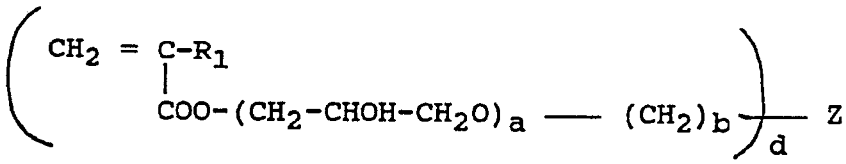 (2)

wherein $R_1$ is hydrogen or methyl, a is 0 or 1, b is from 1 to 4, d is 1 or 2, and z is :

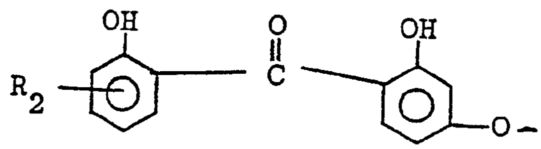 ;

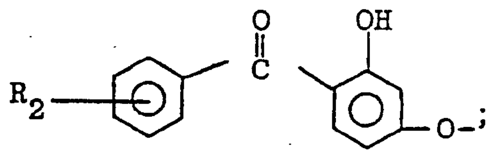 ; or 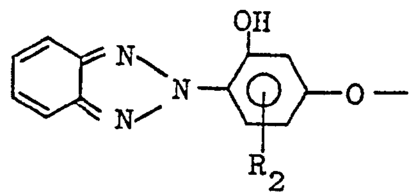

wherein $R_2$ is hydrogen, alkyl or hydroxy and a phenyl benzotriazole of the formula :

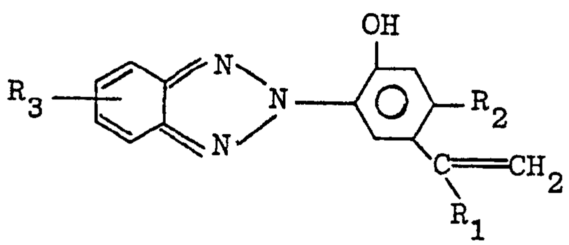

wherein $R_1$ and $R_2$ are as defined above, and $R_3$ is H, alkyl, preferably a $C_1$-$C_{10}$ alkyl, or hydroxyl.

8. A highly oxygen-permeable continuous-wear lens as claimed in any preceding claim, in which the organosilicon monomer component (b) is present in a concentration of from 15 to 35 percent by weight, preferably from 15 to 25 percent by weight, based on the total weight of interpolymerized monomers.

9. A highly oxygen-permeable continuous-wear lens as claimed in any preceding claim, in which the organosilicon monomer is selected from tris(trimethylsiloxy)-γ-methacryloxypropylsilane, 1,3-(γ-methacryloxypropyl-)1,1,3,3-tetra(trimethylsiloxy)disiloxane, and mixtures thereof.

10. A highly oxygen-permeable continuous-wear lens as claimed in Claim 3, or any one of Claims 4-9 when appendant to Claim 3, wherein the hydroxyorganosilicon monomer is hydroxy-di-(trimethylsiloxy)silylpropylmethacrylate.

11. A highly oxygen-permeable continuous-wear lens which comprises a polymer containing :

(a) from 15 to 25 percent by weight, based on the total weight of monomers forming the polymer, of an organosilicon monomer system comprising tris(trimethylsiloxy)silylpropylmethacrylate ;

besteht, worin $R_1$ und $R_2$ die vorstehend angeführte Bedeutung besitzen und $R_3$ H, Alkyl, vorzugsweise ein Alkyl mit 1-10 C-Atomen, oder Hydroxyl ist.

8. Hoch sauerstoffdurchlässige Linse zum andauernden Tragen nach einem der vorhergehenden Ansprüche, in der der Organosiliziummonomerbestandteil (b) in einer Konzentration von 15-35 Gew.-%, vorzugsweise 15-25 Gew.-%, bezogen auf das Gesamtgewicht der interpolymerisierten Monomeren, vorliegt.

9. Hoch sauerstoffdurchlässige Linse zum andauernden Tragen nach einem der vorhergehenden Ansprüche, in der das Organosiliziummonomer aus tris(Trimethylsiloxy)-γ- methacryloxypropylsilan, 1,3-bis(γ-Methacryloxypropyl-)1,1,3,3-tetra(trimethylsiloxy)disiloxan und Mischungen derselben gewählt ist.

10. Hoch sauerstoffdurchlässige Linse zum andauernden Tragen nach Anspruch 3 oder einem der Ansprüche 4 bis 9, wenn sie auf Anspruch 3 rückbezogen sind, worin das Hydroxyorganosiliziummonomer Hydroxy-di-(trimethylsiloxy)silylpropylmethacrylat ist.

11. Hoch sauerstoffdurchlässige Linse zum andauernden Tragen, die ein Polymer umfaßt, das

(a) 15-25 Gew.-%, bezogen auf das Gesamtgewicht der Monomeren, die das Polymer bilden, eines Organosiliziummonomersystems, das tris(Trimethylsiloxy)siliylpropylmethacrylat enthält ;

(b) Methacrylsäure in einer Menge innerhalb des Bereiches von 0,1 bis 15 Gew.-%, bezogen auf das Gesamtgewicht der das Polymer bildenden Monomeren, um im entstandenen Polymer einen Kontaktwinkel von weniger als 45° zu schaffen, und

(c) wenigstens ein vernetzendes Monomer enthält, wobei der Gesamtanteil an vernetzendem Monomer in einer Konzentration von 0,1 bis 2 Gew.-%, bezogen auf das Gesamtgewicht der Monomeren, vorliegt und die Restmenge an Monomeren Hexafluorisopropylmethacrylat umfaßt.

12. Hoch sauerstoffdurchlässige Linse zum andauernden Tragen, umfassend ein Polymer, das auf einer interpolymerisierten Basis 19 bis 30 Gew.-Teile tris(Trimethylsiloxy)silylpropylmethacrylat, 0,1 bis 0,2 Gew.-Teile 1,3-bis(γ -Methacryloxypropyl)-1,1,3,3-tetra(trimethylsiloxy)disiloxan, 65-75 Gew.-Teile Hexafluorisopropylmethacrylat und etwa 5 Gew.-Teile Methacrylsäure enthält.

**Revendications**

1. Lentille à usage permanent, extrêmement perméable à l'oxygène, formée en un polymère obtenu par interpolymérisation d'une charge monomère, comprenant :

(a) un composant monomère fluoroorganique comprenant un hexafluoroisopropylméthacrylate ;

(b) au moins un monomère d'organosilicone copolymérisable avec l'hexafluoroisopropylméthacrylate, le composant monomère (b) étant présent en une quantité de 10 à 40 pourcent en poids basé sur le poids total des monomères ;

(c) au moins un monomère hydrophile, pour produire dans le polymère résultant un angle de contact inférieur à 45°, la quantité totale du composant monomère hydrophile allant de 0,1 à 15 pourcent en poids, basé sur le poids total des monomères ;

(d) au moins un monomère réticulant présent en une quantité allant jusqu'à 5 pourcent en poids basé sur le poids total des monomères, et

(e) optionnellement, jusqu'à 50 pourcent en poids de la teneur en organofluoré du polymère d'un ou de plusieurs monomères pour ajuster les propriétés physiques de la lentille, sachant que la teneur, dans le composant optionnel (e) de la lentille, en acrylates ou méthacrylates ne dépasse pas 5 pourcent en poids de la charge monomère, ladite lentille présentant une perméabilité à l'oxygène d'au moins $150 \times 10^{-11}(cm^2/sec.)(ml\ O_2/ml \times mm\ Hg)$.

2. Lentille à usage permanent, extrêmement perméable à l'oxygène selon la revendication 1, dans laquelle le composant monomère d'organosilicone (b) est composé d'au moins un monomère de formule :

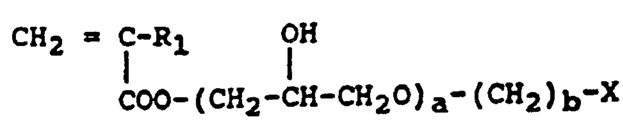

dans laquelle $R_1$ est l'hydrogène ou un radical méthyle, a vaut 0 ou 1, b vaut de 1 à 4, et X est une partie d'orga-

21 Fluoratome enthält.

5. Hoch sauerstoffdurchlässige Linse zum andauernden Tragen nach Anspruch 4, in der im Bestandteil (a) zusätzlich zum Hexafluorisopropylmethacrylat wenigstens ein weiteres Fluororganomonomer der Formel

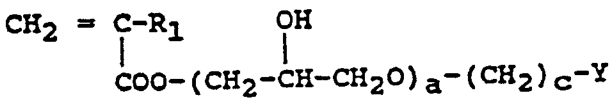

enthalten ist, worin $R_1$ Wasserstoff oder Methyl bedeutet und a, c und Y die in Anspruch 4 angeführten Bedeutungen besitzen.

6. Hoch sauerstoffdurchlässige Linse zum andauernden Tragen nach einem der vorhergehenden Ansprüche, in der wenigstens ein UV-absorbierendes Mittel in einer Menge von 0,1 bis 20 Gew.-%, bezogen auf das Gewicht des UV-absorbierenden Mittels und der Monomeren, enthalten ist.

7. Hoch sauerstoffdurchlässige Linse zum andauernden Tragen nach Anspruch 6, in der das UV-absorbierende Mittel eine polymerisierte Menge eines Monomers enthält, das aus der Gruppe gewählt ist, die aus einem Hydroxybenzophenon oder Benzotriazol der Formel

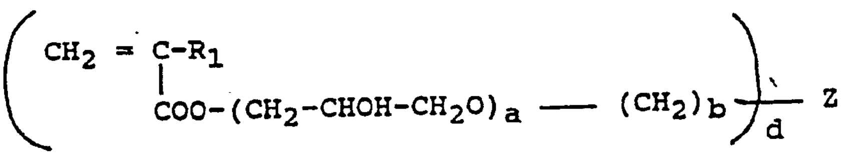 (2)

worin $R_1$ Wasserstoff oder Methyl bedeutet, a für 0 oder 1 steht, b 1 bis 4 darstellt, d 1 oder 2 bedeutet, und z

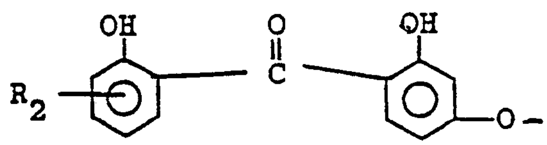 ;

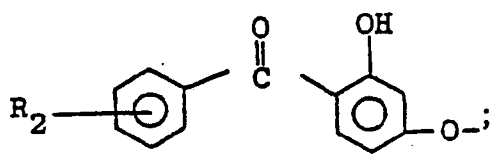 ; oder 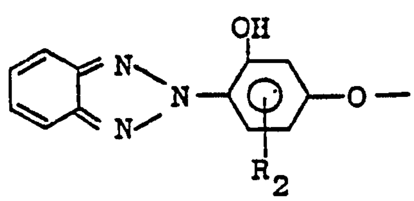

ist, worin $R_2$ Wasserstoff, Alkyl oder Hydroxy bedeutet und einem Phenylbenzotriazol der Formel

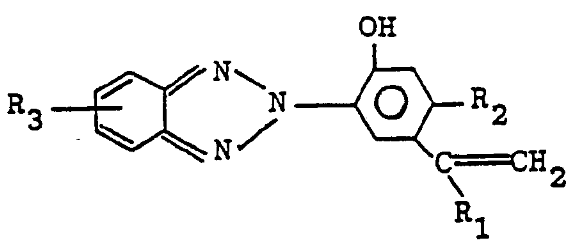

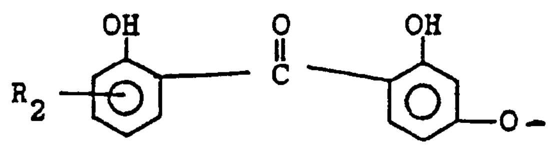 ;

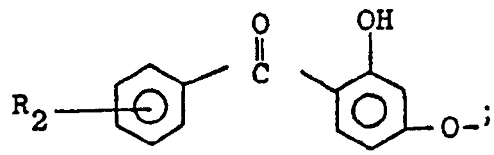 ; ou 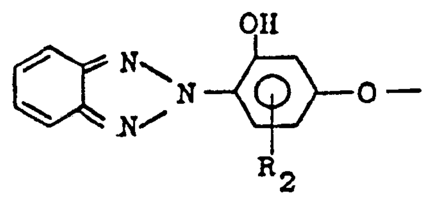

dans lequel R2 est l'hydrogène, le radical alkyl ou hydroxy et un phényl benzotriazole de formule :

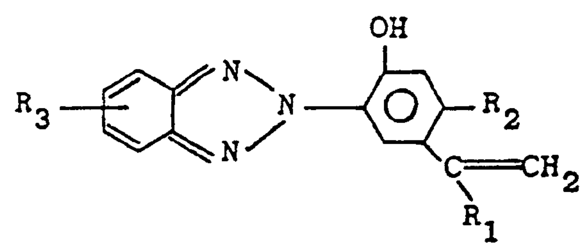

dans lequel $R_1$, et $R_2$ sont tels que définis ci-dessus, et $R_3$ est H, un alkyle, de préférence un alkyle en $C_1$-$C_{10}$ ou un hydroxyle.

8. Lentille à usage permanent, extrêmement perméable à l'oxygène selon l'une quelconque des revendications précédentes, dans laquelle le composant monomère d'organosilicone (b) est présent en une concentration allant de 15 à 35 pourcent en poids, de préférence de 15 à 25 pourcent en poids, basé sur le poids total de monomères interpolymérisés.

9. Lentille à usage permanent extrêmement perméable à l'oxygène selon l'une quelconque des revendications précédentes, dans laquelle le composant organosilicone est sélectionné parmi : le tris(triméthylsiloxy)-γ-méthacryloxypropylsilane, le 1,3-bis-(γ-méthacryl-oxypropyl-)1,1,3,3-tétra(triméthylsiloxy)disiloxane, et leurs mélanges.

10. Lentille à usage permanent, extrêmement perméable à l'oxygène selon la revendication 3 ou l'une quelconque des revendications 4 à 9 rattachée à la revendication 3, dans laquelle le monomère hydroxyorganosilicone est le (hydroxy-di-triméthylsiloxy) silylpropylméthacrylate.

11. Lentille à usage permanent, extrêmement perméable à l'oxygène, comprenant :

(a) de 15 à 25 pourcent en poids, basé sur le poids total de monomères formant le polymère, d'un système de monomère d'organosilicone comprenant du tris(triméthylsiloxy)silylpropylméthacrylate ;

(b) de l'acide méthacrylique en une quantité située dans la plage allant de 0,1 à 15% en poids basé sur le poids total des monomères formant le polymère, pour produire sur le polymère résultant un angle de contact inférieur à 45° ; et

(c) au moins un monomère réticulant, le total des monomères réticulants étant présent en une concentration allant de 0,1 à 2 pourcent en poids basé sur le poids total des monomères, l'équilibre des monomères comprenant de l'hexafluoroisopropylméthacrylate.

12. Lentille à usage permanent, extrêmement perméable à l'oxygène, comprenant un polymère contenant, sur une base d'interpolymérisation, de 19 à 30 parties en poids de tris(triméthylsiloxy)silylpropylméthacrylate, de 0,1 à 0,2 parties en poids de 1,3-bis(-γ-méthacryloxypropyl)- 1,1,3,3-tétra(tri-méthylsiloxy)disiloxane, de 65 à 75 parties en poids d'hexafluoroisopropylméthacrylate et approximativement 5 parties en poids d'acide méthacrylique.

nosilicone contenant jusqu'à 16 atomes de silicium.

3. Lentille à usage permanent, extrêmement perméable à l'oxygène selon la revendication 2, dans laquelle au moins une partie du composant monomère d'organosilicone (b), contenant de préférence de 0,1 à 10 pourcent en poids du poids total des monomères interpolymérisés, est un monomère d'hydroxyorganosilicone comportant au moins un groupe hydroxyle fixé au silicone de la partie d'organosilicone.

4. Lentille à usage permanent, extrêmement perméable à l'oxygène selon l'une quelconque des revendications précédentes, dans laquelle est présent dans le composant (a), en plus dudit hexafluoroisopropylméthacrylate, au moins un autre monomère fluoroorgané, de formule :

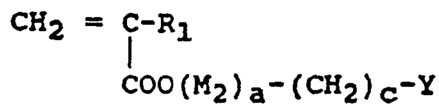

dans lequel $R_1$ est l'hydrogène ou un alkyle, $M_2$ est un hydroxy alkyle, un alkyl éther, ou un hydroxy alkyle éther, a vaut 0 ou 1, c vaut de 0 à 4, et Y est un groupe fluorocarboné, de préférence contenant de 2 à 21 atomes de fluor.

5. Lentille à usage permanent, extrêmement perméable à l'oxygène selon la revendication 4, dans laquelle est présent, dans le composant (a), en plus du hexafluoroisopropylméthacrylate, au moins un autre monomère fluoroorgano, de formule :

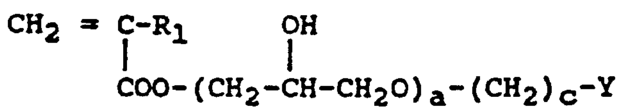

dans lequel R1 est l'hydrogène ou le radical méthyle, et a, c et Y sont tels que définis dans la revendication 4.

6. Lentille à usage permanent, extrêmement perméable à l'oxygène selon l'une quelconque des revendications précédentes, dans laquelle est présent au moins un agent absorbant les UV, en une quantité allant de 0,1 à 20 pourcent en poids, basé sur le poids de l'agent absorbant les UV et des monomères.

7. Lentille à usage permanent, extrêmement perméable à l'oxygène selon la revendication 6, dans laquelle l'agent absorbant les UV comprend une quantité polymérisée d'un monomère sélectionné dans le groupe consistant en un hydroxybenzophénone ou un benzotriazole de formule :

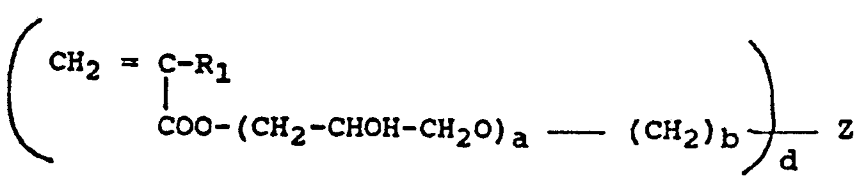 (2)

dans lequel $R_1$ est l'hydrogène ou le radical méthyle, a vaut 0 ou 1, b vaut de 1 à 4, d vaut 1 ou 2, et z est :